# EUROPÄISCHE PATENTSCHRIFT

(11) **EP 3 411 767 B1**
(45) Veröffentlichungstag und Bekanntmachung des Hinweises auf die Patenterteilung: **25.05.2022**
(21) Anmeldenummer: 17707172.7
(22) Anmeldetag: 22.02.2017
(51) Int. Cl.: G05D 1/00, B64D 43/00, G05B 19/042, G06F 13/40

(54) **LUFTFAHRZEUG**
AIRCRAFT
AÉRONEF

(30) Priorität: 24.02.2016 DE 102016002126
(43) Veröffentlichungstag der Anmeldung: 12.12.2018
(73) Patentinhaber: Liebherr-Aerospace Lindenberg GmbH, 88161 Lindenberg (DE)
(72) Erfinder: MIELZAREK,Rainer, 88171 Weiler-Simmerber (DE); KRONBURGER, Frank, 88161 Lindenberg (DE)
(74) Vertreter: Herrmann, Uwe
(86) Internationale Anmeldenummer: PCT/EP2017/000251
(87) Internationale Veröffentlichungsnummer: WO 2017/144176

(56) Entgegenhaltungen:
- US-A1- 2011 054 721
- US-A1- 2011 208 361
- US-A1- 2015 241 874
- R Mohan ET AL: "Building Integrated ARINC 429 Interfaces using an FPGA", , 1. Januar 2005 (2005-01-01), XP055369152, Gefunden im Internet: URL:http://www.klabs.org/mapld05/papers/23 6_land_paper.pdf [gefunden am 2017-05-03]

## Beschreibung

Die vorliegende Erfindung betrifft ein Luftfahrzeug mit wenigstens einem Flugsteuerflächen-Aktuator und mit wenigstens einem elektronischen Gerät zur Regelung des Flugsteuerflächen-Aktuators, wobei das elektronische Gerät wenigstens ein Interface aufweist, mittels dessen Signale zur Ansteuerung des Flugsteuerflächen-Aktuators bereitgestellt werden, wobei das elektronische Gerät eine Kombination aus wenigstens einem Microcontroller und wenigstens einem Field Programmable Gate Array (FPGA) Core aufweist, die durch eine Kommunikationsverbindung miteinander in Verbindung stehen, wobei der FPGA Core als I/ O-Handler oder Datenkonzentrator dient und konfigurierbar ist, so dass je nach der Konfiguration des FPGA Cores unterschiedliche Signale von Sensoren oder sonstiger Signalquellen verarbeitet werden können.

Aus dem Stand der Technik ist die Verwendung sogenannter Remote Electronic Units (REU) bekannt, die für bestimmte Anwendungen entwickelt werden, um ausschließlich die dazugehörigen elektrischen Interfaces zu bedienen.

Dabei ist es nachteilig, dass die elektrischen Interfaces nur mit bestimmten Typen von Sensoren oder analogen Interfaces kompatibel sind bzw. nur dazu in der Lage sind, bestimmte Antriebselemente oder sonstige Komponenten anzusteuern. Somit ist gemäß dem Stand der Technik die Verwendung von ein und demselben elektronischen Gerät für unterschiedliche Anwendungen nur sehr eingeschränkt bzw. nicht möglich.

Beispielsweise offenbart US 2011/054721 A1 ein System zum Überwachen von Flugzeugausrüstung, das ein Chassis aufweist, ein Innenteil definiert, eine Anordnung, die konfiguriert ist, um Eingabedaten von mindestens einem Flugzeugparameter zu akzeptieren, wobei die Anordnung konfiguriert ist, um in einem Flugzeug platziert zu werden, einen absturzfesten Cockpit-Sprach- und Flugdatenschreiber und eine Stromversorgungsanordnung, die mit der Anordnung und dem Rekorder verbunden ist.

US 2015/241874 A1 zeigt eine konfigurierbare generische elektrische Einrichtung, umfassend Verarbeitungseinrichtung zum Implementieren mindestens einer konfigurierten Funktion, wobei die Verarbeitungseinrichtung eine Verarbeitungseinheit umfasst, vordefinierte Funktionsblöcke in der Verarbeitungseinheit implementiert sind, wobei die Verarbeitungseinheit ein Speichermodul umfasst, das zum Speichern von Konfigurationsdaten ausgelegt ist, dadurch gekennzeichnet, dass die Verarbeitungseinheit Routing-Mittel umfasst, die zum Verbinden der Blöcke und zum Organisieren des Datenaustauschs zwischen den Blöcken gemäß Verbindungsdaten ausgelegt sind, die in den im Speichermodul gespeicherten Konfigurationsdaten enthalten sind.

US 2011/208361 A1 zeigt eine digitale Verarbeitungsverbindung für ein Schwingungskontrollsystem.

Der vorliegenden Erfindung liegt die Aufgabe zugrunde, ein Luftfahrzeug der eingangs genannten Art dahingehend weiterzubilden, dass das elektronische Gerät flexibler einsetzbar ist, als dies aus dem Stand der Technik bekannt ist.

Diese Aufgabe wird durch ein Luftfahrzeug mit den Merkmalen des Anspruchs 1 gelöst. Danach ist vorgesehen, dass das Gerät Mittel zur konfigurierbaren Signalzuordnung aufweist, mittels derer die Signale zur Ansteuerung des Flugsteuerflächen-Aktuators an den FGPA Core und an den Microcontroller zuführbar sind, und wobei der Microcontroller dazu konfiguriert ist, eine unabhängige Überprüfung oder auch einen Vergleich durchzuführen gegenüber den Signalen, die dem FPGA Core zugeführt werden.

Die Abkürzung FPGA steht für Field Programmable Gate Array.

Aufgrund der Tatsache, dass der FPGA Core konfigurierbar ist bzw. konfigurierbare Interfaces aufweist, ist der Einsatz des elektronischen Gerätes nicht auf eine bestimmte Anwendung festgelegt. Vielmehr kann das kombinierte elektronische Gerät zur Ansteuerung eines Flugsteuerflächen-Aktuators dahingehend konfiguriert werden, dass seine Funktionalität an den anzusteuernden Flugsteuerflächen-Aktuator und/oder an die Signale anpassbar ist, die dem elektronischen Gerät z.B. von Sensoren oder sonstigen Interfaces bereitgestellt werden.

Somit wird die Möglichkeit geschaffen, die elektrischen Interfaces des elektronischen Gerätes je nach Anwendung universell zu konfigurieren, sodass unterschiedliche Typen von Sensoren oder analoge Interfaces ausgewertet und/oder unterschiedliche Antriebselemente angesteuert werden können.

Somit kann ein und dasselbe elektronische Gerät in unterschiedlichen Anwendungen zum Einsatz kommen.

Erfindungsgemäß dient das elektronische Gerät zur Positionsregelung und Ansteuerung eines Flugsteuerflächen-Aktuators eines Luftfahrzeuges sowie auch zur Datenkonzentration von elektrischen Signalen, die von den konfigurierbaren Interfaces erhalten werden.

Vorzugsweise ist das elektronische Gerät in der Umgebung des anzusteuernden Flugsteuerflächen-Aktuators, z.B. an Flugsteuerflächen, im Fahrwerksbereich des Flugzeuges wie auch im Umfeld der Steuerelemente der Piloten anbringbar oder integrierbar.

An dieser Stelle wird darauf hingewiesen, dass der Begriff der "Ansteuerung" weit zu fassen ist und neben einer Steuerung auch eine Regelung oder eine Überwachung des Flugsteuerflächen-Aktuators mit einschließt.

Das elektronische Gerät ist aufgrund seiner Konfigurierbarkeit für unterschiedliche Anwendungsfälle, wie z.B. zur Regelung eines Flugsteuerflächen-Aktuators oder auch zur Datenkonzentration von elektrischen Signalen, die zur Ansteuerung und Überwachung von Flugsteuerflächen-Aktuatoren eines Luftfahrzeuges dienen, flexibel konfigurierbar.

Wie eingangs ausgeführt umfasst das elektronische Gerät zumindest eine Kombination aus einem Microcontroller und einem oder mehreren FPGA Cores mit konfigurierbarer Signalzuordnung, wobei die beiden Komponenten vorzugsweise folgende Funktionen erfüllen: In einer bevorzugten Ausgestaltung hat das FPGA Core je nach Anwendung konfigurierbare Interfaces zur Bereitstellung von Signalen für weitere Applikationen des elektronischen Gerätes und/oder zur Datenkonzentration und Übertragung der Informationen an weitere Flugzeugcomputer, wie beispielsweise an die Actuator Control Unit, an den Flight Control Computer etc. über einen Datenbus. Vorzugsweise steht das elektronische Gerät somit ausgangsseitig mit zumindest einem Datenbus in Verbindung bzw. kommuniziert über einen Datenbus mit einem oder mehreren weiteren Rechnern des Luftfahrzeuges.

In einer bevorzugten Ausgestaltung stellt der FPGA Core integre Signale für die Verwendung in sicherheitskritischen Systemen bereit.

Der Microcontroller bzw. der Microcontroller Core dient vorzugsweise zur Durchführung rechenintensiver Algorithmen unter Verwendung der vom FPGA bereitgestellten Interface Informationen.

In einer weiteren Ausgestaltung der Erfindung stellt der Microcontroller Core die Integrität für sicherheitsrelevante Signale oder gerätespezifische Regelungsmechanismen her und führt selbstständig selektierte Überwachungsfunktionen, wie beispielsweise der Antriebseinheit eines Fahrwerkes oder einer Klappe eines High-Lift-Systems durch.

In einer bevorzugten Ausgestaltung der Erfindung initiiert der Microcontroller Core notwendige Überprüfungen des Systems beim Einschalten (power up) und übernimmt die zur Wartung notwendigen Anwendungen, wie beispielsweise den Fehlerdatenspeicher oder auch die Übertragung vom Gerätestatus über den Datenbus.

Errfindungsgemäß umfasst das elektronische Gerät Mittel zur konfigurierbaren Signalzuordnung. Dies bedeutet, dass die Anzahl der Signale, die dem FPGA Core oder dem Microcontroller Core oder beiden zugeführt werden über einfache Bestückungsoptionen konfiguriert und angepasst werden können.

In einer bevorzugten Ausgestaltung der Erfindung dient das kombinierte elektronische Gerät zur Positionsregelung und Ansteuerung eines Antriebselementes eines Luftfahrzeuges sowie auch zur Datenkonzentration von elektrischen Signalen mit konfigurierbaren Interfaces.

Wie oben ausgeführt, basiert das elektronische Gerät auf einer Kombination wenigstens eines Microcontrollers und wenigstens eines FPGA Cores, wobei der FPGA Core hauptsächlich als I/O (Input-Output-Handler) oder Datenkonzentrator dient und je nach Anwendung entsprechend konfigurierbar ist. Dies bedeutet, dass vorzugsweise durch Laden von Anwendungs IP Cores im FPGA an denselben elektrischen Anschlüssen je nach Applikation unterschiedliche Sensoren bzw. sonstige Interfaces, d.h. Signalquellen bedient werden können. Bei den von diesen Interfaces bzw. Sensoren bereitgestellten Signalen kann es sich beispielsweise um analoge Signale, LVDT, Resolver, diskrete Signale etc. handeln.

Die auf diese Weise an das elektronische Gerät übermittelten Signale bzw. Daten können beispielsweise entweder auf dem externen digitalen Datenbus übertragen werden oder auch innerhalb des elektronischen Gerätes zur Positionsregelung und Überwachungsfunktion zur Verfügung gestellt werden. Dabei ist ein Microcontroller für die Ausführung von mathematischen Algorithmen und Monitoring Funktionen verantwortlich.

Außerdem ist das elektronische Gerät gemäß der Erfindung vorzugsweise in der Lage, die in der Luftfahrt typischen Sicherheitsanforderungen für die Auswertung kritischer Signale zu erfüllen und diese auf dem Datenbus zur Verfügung zu stellen. Der Datenbus kann mit einem oder mehreren weiteren Rechnern des Luftfahrzeuges in Verbindung stehen, auf denen die Auswertung der mittels des Datenbusses bereitgestellten Informationen durchgeführt wird.

Erfindungsgemäß führt der Microcontroller Core dazu eine unabhängige Überprüfung oder auch einen Vergleich gegenüber den FPGA Core zugeführten Signalen durch. Die unabhängige Überprüfung oder Vergleich kann auch gegenüber einem redundanten Signal zum Eingangssignal des FPGA Core erfolgen. Die Anzahl der Signale, die dem FPGA Core und/oder dem Microcontroller Core zugeführt werden können wie oben ausgeführt über einfache Bestimmungsoptionen bzw. über entsprechende Mittel zur Konfiguration konfiguriert und angepasst werden.

Ein Vorteil davon ist, dass die Umsetzung mit geringem Platzbedarf erfolgt und die Technik in einem kleinen Gehäuselokal untergebracht werden kann.

Die Vorteile der Erfindung gegenüber dem Stand der Technik bestehen in den flexiblen Konfigurationen des elektronischen Gerätes je nach Anwendung. Dies bedeutet, dass ein und dasselbe elektronische Gerät zur Ansteuerung bzw. zur Regelung eines Antriebselementes wie auch zur Auswertung und Datenkonzentration von elektrischen Signalen, die zur Ansteuerung und Überwachung eines Flight Control Systems oder Steuerelementen des Piloten etc. dienen, verwendet werden kann.

Die In- und Outputs des elektronischen Gerätes können je nach Anwendung flexibel konfiguriert werden, woraus sich die flexible Einsatzmöglichkeit des elektronischen Gerätes ergibt.

Insgesamt ergibt sich des Weiteren eine Gewichtsersparnis und ein reduzierter Verkabelungsaufwand am Flugzeug sowie der Vorteil einer einfachen Wartung durch Verwendung eines einzigen Gerätetyps für unterschiedliche Anwendungen. Die erfindungsgemäße Kombination aus Microcontroller und FPGA ermöglicht einen universellen Einsatz.

Als weiterer Vorteil ist die Verwendung auch für sicherheitskritische Systeme durch Sicherstellen der Integrität der sicherheitsrelevanten Signale zu nennen.

Weitere Einzelheiten und Vorteile der Erfindung werden anhand eines in der Zeichnung dargestellten Ausführungsbeispiels näher erläutert.

Es zeigen:
Figur 1: in einer schematischen Ansicht ein elektronisches Gerät eines Luftfahrzeuges gemäß der Erfindung und
Figur 2: in einer schematischen Ansicht ein elektrisches Gerät eines Luftfahrzeuges gemäß der Erfindung in einer weiteren Ausführungsform.

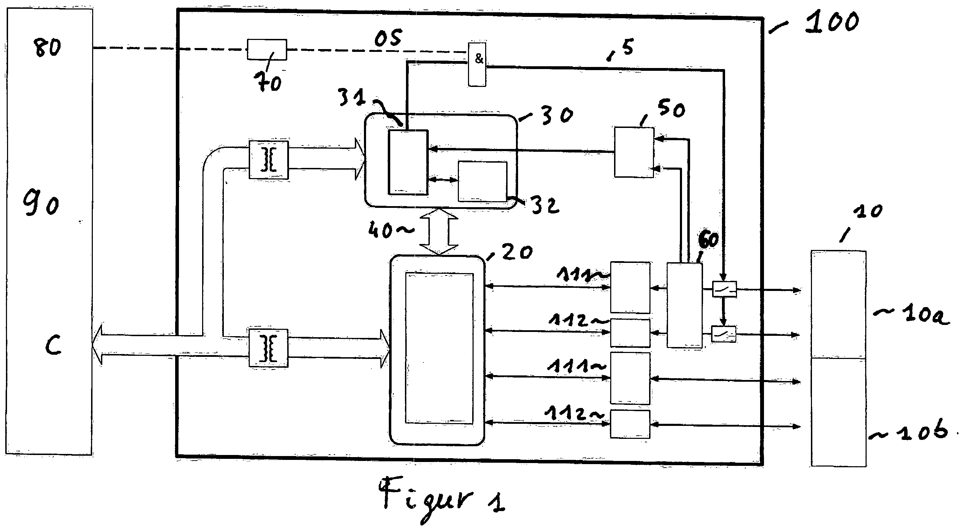

In Figur 1 ist das elektronische Gerät mit dem Bezugszeichen 100 gekennzeichnet. Das Bezugszeichen 10 kennzeichnet kritische und nicht kritische Interfaces bzw. Sensoren, wobei in dem Bereich 10a kritische und nicht kritische Interfaces oder Sensoren und in dem Bereich 10b nicht kritische Interfaces oder Sensoren angeordnet sind bzw. deren Signale zur Verfügung gestellt werden.

Wie dies aus der Figur weiter hervorgeht, werden die nicht kritischen Signale gemäß 10b an diskrete In/Out und Powerswitches 111 übertragen bzw. an den analogen Input/Output 112. Entsprechendes gilt für die kritischen und nicht kritischen Interfaces oder Sensoren 10a, die ebenfalls an die Einheiten 111 und 112 übertragen werden, wobei zwischen diesen beiden Komponenten die konfigurierbare Signalzuordnung 60 angeordnet ist. Das elektronische Gerät weist somit vorzugsweise neben dem Microcontroller 30 und dem oder den FPGA Cores 20 Mittel zur konfigurierbaren Signalzuordnung 60 auf.

Das Bezugszeichen 50 kennzeichnet analoge und diskrete Inputs, die dem oder den Microcontrollern 30 zugeführt werden.

Der FPGA 20 hat je nach Anwendung konfigurierbare Interfaces zur Bereitstellung von Signalen für weitere Applikationen des elektronischen Gerätes oder zur Datenkonzentration und Übertragung der Informationen an weitere Flugzeugcomputer, wie beispielsweise eine Actuator Control Unit, einen Flight Control Computer über den Datenbus 110. Die entsprechende Kommunikation ist in der Figur mit dem Bezugszeichen C gekennzeichnet. Eine weitere Aufgabe des FPG Cores 20 ist die Bereitstellung von integren Signalen für die Verwendung in sicherheitskritischen Systemen.

Der Microcontroller Core 30 dient zur Umsetzung rechenintensiver Algorithmen unter Verwendung der vom FPGA bereitgestellten Interface Informationen. Zur Durchführung dieser Algorithmen und Funktionen dient die Einheit 32. Das Bezugszeichen 31 des Microcontrollers 30 kennzeichnet die Monitor Section.

Der Microcontroller 30 dient nicht nur zur Umsetzung bzw. zur Durchführung rechenintensiver Algorithmen auf der Basis der vom FPGA 20 über die Verbindung 40 bereitgestellten Interface Informationen, sondern auch dazu, die Integrität für sicherheitsrelevante Signale oder gerätespezifische Regelungsmechanismen herzustellen und führt selbstständig selektierte Überwachungsfunktionen, beispielsweise eine Antriebseinheit durch. Des Weiteren initiiert der Microcontroller Core 30 notwendige Überprüfungen des Systems beim Einschalten und übernimmt die zur Wartung notwendigen Anwendungen.

Wie bereits oben ausgeführt, dient die Einheit 60 zur Konfiguration und Anpassung der Anzahl der Signale, die dem FPGA Core 20 und dem Microcontroller Core 30 oder in Kombination an beide zugeführt werden sollen. Diese Anzahl der Signale kann über einfache Bestimmungsoptionen konfiguriert und angepasst werden.

Das Bezugszeichen 90 in der Figur kennzeichnet eine Electronic Control Unit und das Bezugszeichen 80 eine Abschaltung der elektronischen Einheit 100 über den digitalen Input 70. Das Bezugszeichen OS kennzeichnet einen optionalen Shut Down, der zum Abschalten des elektronischen Gerätes dient.

Durch die vorliegende Erfindung ist es möglich, den FPGA z.B. durch Laden von IP (Intellectual Property) Cores derart zu konfigurieren, dass an denselben elektrischen Anschlüssen bzw. Interfaces des elektronischen Gerätes je nach Applikation unterschiedliche Interfaces bzw. Sensoren bedient bzw. angeschlossen werden können, was bedeutet, dass z.B. analoge Signale, LVDT (Linear Variable Differential Transducer) etc. verarbeitet werden können.

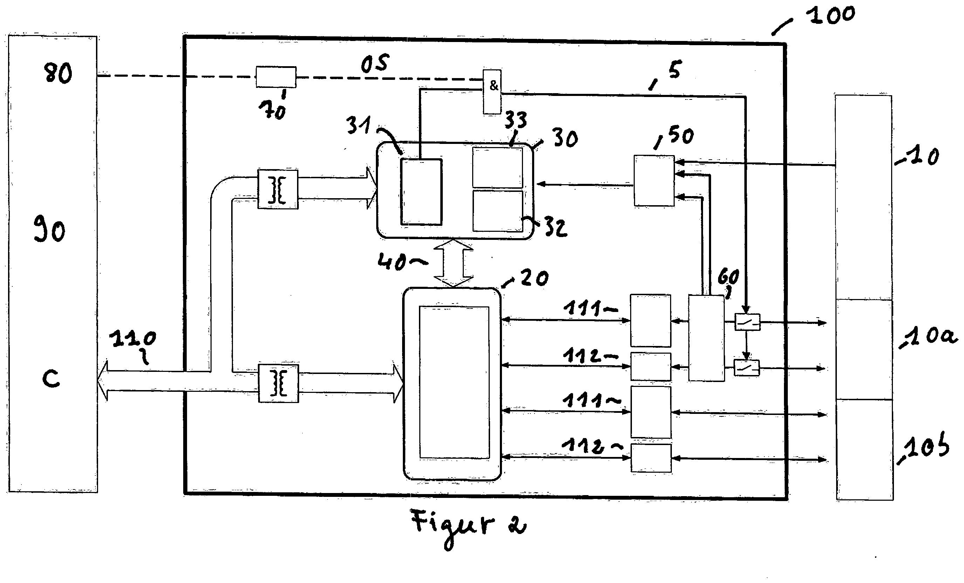

Figur 2 zeigt ein weiteres Ausführungsbeispiel, wobei gleiche oder funktionsgleiche Elemente mit denselben Bezugszeichen versehen sind, wie in Figur 1.

Der oder die Sensoren sind über analoge und diskrete Inputs 50 direkt an den Microcontroller 30 angeschlossen.

Der Microcontroller 30 weist einen konfigurierbaren Daten-Konzentrator 33 auf.

Die Figuren zeigen die Verwendung des Gerätes 100 z.B. zur Ansteuerung eines nicht dargestellten Aktuators, wobei die Interfaces in einer Weise konfiguriert werden, dass der Aktuator vom Gerät 100 angesteuert und überwacht werden kann.

Die zum Betrieb der LVDTs benötigte Amplitude und Frequenz der Erregungsspannung wird über einen universellen analogen Ausgang mit variabler Spannung und Frequenz mit Hilfe eines im FPGA 20 realisierten Rechenverfahrens bereitgestellt. Zum Einlesen und Auswerten der LVDT Signalspannung, welche zur Bestimmung der LVDT Position benötigt werden, wird einer der universell verwendbaren analogen Eingänge (geeignet z.B. für Spannungsmessung, Strommessung, Frequenzmessung, Widerstandsmessung ...) im FPGA 20 unter Verwendung von LVDT spezifischen Auswertealgorithmen entsprechend konfiguriert. Der zur Ansteuerung im Aktuator befindindlichen Servo Ventile benötigte Steuerstrom wird über einen der universell verwendbaren analogen Ausgänge bereitgestellt, wobei der Steuerstrom vom FPGA 20 unter Verwendung anwendungsspezifischer Algorithmen eingestellt wird.

Die für dieses Ausführungsbeispiel benötigten Signale zur Sicherstellung der Integrität und Überwachung des Aktuators, werden über die universell verwendbaren analogen Eingänge (geeignet z.B. für Spannungsmessung, Strommessung, Frequenzmessung, Widerstandsmessung ...) des Microcontrollers 30 mit spezifischer Programmierung der Auswertealgorithmen verarbeitet. Im Ausführungsbeispiel handelt es sich um LVDT Signale und Strommessung der Servoventil-Ansteuerung. Die Ansteuerung des im Ausführungsbeispiel gezeigten Mode Selctor Valves, welches als Magnetventil ausgeführt ist, wird mittels einem von mehreren diskreten Ausgängen durchgeführt und kann z.B. im Fehlerfall auf Anforderung vom Mikrocontroller 30 unterbrochen werden. Die zum Betreiben des Aktuators aufbereiteten Signale werden über einen Datenbus zwischen Mikrocontroller 30 und FGPA 20 ausgetauscht und nach Bedarf über einen externen Datenbus zur Verfügung gestellt.

## Patentansprüche

1. Luftfahrzeug mit wenigstens einem Flugsteuerflächen-Aktuator und mit wenigstens einem elektronischen Gerät (100) zur Regelung des Flugsteuerflächen-Aktuators, wobei das elektronische Gerät wenigstens ein Interface (10) aufweist, mittels dessen Signale zur Ansteuerung des Flugsteuerflächen-Aktuators bereitgestellt werden, wobei das elektronische Gerät eine Kombination aus wenigstens einem Microcontroller (30) und wenigstens einem Field Programmable Gate Array (FPGA) Core (20) aufweist, die durch eine Kommunikationsverbindung (40) miteinander in Verbindung stehen, wobei der FPGA Core (20) als I/O-Handler oder Datenkonzentrator dient und konfigurierbar ist, so dass je nach der Konfiguration des FPGA Cores (20) unterschiedliche Signale von Sensoren oder sonstiger Signalquellen verarbeitet werden können,
**dadurch gekennzeichnet, dass**
das Gerät (100) Mittel (60) zur konfigurierbaren Signalzuordnung aufweist mittels derer die Signale zur Ansteuerung des Flugsteuerflächen-Aktuators an den FGPA Core (20) und an den Microcontroller (30) zuführbar sind, und wobei der Microcontroller (30) dazu konfiguriert ist, eine unabhängige Überprüfung oder
auch einen Vergleich durchzuführen gegenüber den Signalen, die dem FPGA Core (20) zugeführt werden.

2. Luftfahrzeug nach Anspruch 1, **dadurch gekennzeichnet, dass** das FPGA Core (20) durch Laden von Anwendungs IP (Intellectual Property) Cores konfigurierbar ist.

3. Luftfahrzeug nach einem der vorhergehenden Ansprüche, **dadurch gekennzeichnet, dass** es sich bei den Signalen, die an den Interfaces (10) anliegen, um analoge Signale, digitale Signale, Linear Variable Differential Transducer (LVDT), Resolver oder diskrete Signale handelt.

4. Luftfahrzeug nach einem der vorhergehenden Ansprüche, **dadurch gekennzeichnet, dass** das Gerät (100) wenigstens einen Ausgang aufweist, der mit einem digitalen Datenbus (110) kommuniziert, wobei der Ausgang mit dem Microcontroller (30) sowie mit dem FPGA Core (20) in Verbindung steht und wobei der Datenbus (110) mit einem oder mehreren Rechnern des Luftfahrzeuges kommuniziert.

5. Luftfahrzeug nach einem der vorhergehenden Ansprüche, **dadurch gekennzeichnet, dass** der FPGA Core (20) ausgebildet ist, mehrere Daten zu konzentrieren und/oder Signale an den Microcontroller (30) zu übertragen.

6. Luftfahrzeug nach einem der vorhergehenden Ansprüche, **dadurch gekennzeichnet, dass** der Microcontroller (30) ausgebildet ist, unter Verwendung der von dem FPGA Core (20) bereit gestellten Signale Algorithmen auszuführen.

## Claims

1. Aircraft having at least one flight control surface actuator and having at least one electronic device (100) for controlling the flight control surface actuator, wherein the electronic device has at least one interface (10) by means of which signals for controlling the flight control surface actuator are provided, wherein the electronic device has a combination of at least one microcontroller (30) and at least one Field Programmable Gate Array (FPGA) Core (20) that communicate with one another via a communication link (40), the FPGA Core (20) serving as I/O handler or data concentrator and being configurable such that different signals from sensors or other signal sources can be processed in dependence on the configuration of the FPGA Core (20),
**characterized in that**
the device (100) comprises means (60) for a configurable signal association by means of which the signals for controlling the flight control surface actuator can be supplied to the FPGA Core (20) and to the microcontroller (30), and wherein the microcontroller is configured to carry out an independent inspection of or even a comparison with the signals supplied to the FPGA Core (20).

2. Aircraft in accordance with claim 1, **characterized in that** the FPGA Core (20) is configurable by charging application IP (Intellectual Property) Cores.

3. Aircraft in accordance with one of the preceding claims, **characterized in that** the signals that are applied to the interfaces (10) are analog signals, digital signals, Linear Variable Differential Transducers (LVDT), resolvers, or discrete signals.

4. Aircraft in accordance with one of the preceding claims, **characterized in that** the device (100) has at least one output that communicates with a digital data bus (110), the output being connected to the microcontroller (30) and to the FPGA Core (20) and with the data bus (110) communicating with one or more computers of the aircraft.

5. Aircraft in accordance with one of the preceding claims, **characterized in that** the FPGA Core (20) is configured to concentrate a plurality of data and/or to transfer signals to the microcontroller (30).

6. Aircraft in accordance with one of the preceding claims, **characterized in that** the microcontroller (30) is configured to carry out algorithms using the signals provided by the FPGA Core (20).

## Revendications

1. Aéronef avec au moins un actionneur de gouvernes de vol et avec au moins un appareil électronique (100) pour réguler l'actionneur de gouvernes de vol, dans lequel l'appareil électronique présente au moins une interface (10), au moyen de laquelle des signaux sont délivrés pour piloter l'actionneur de gouvernes de vol, dans lequel l'appareil électronique présente une combinaison composée d'au moins un microcontrôleur (30) et d'au moins un noyau FPGA (Field Programmable Gate Array) (20) qui sont en liaison l'un avec l'autre par une liaison de communication (40), dans lequel le noyau FPGA (20) sert de gestionnaire d'entrée-de sortie ou de concentrateur de données et peut être configuré de telle sorte que selon la configuration du noyau FPGA (20), différents signaux de capteurs ou d'autres sources de signaux peuvent être traités,
**caractérisé en ce que**
l'appareil (100) présente des moyens (60) pour l'association de signaux pouvant être configurée au moyen de laquelle les signaux peuvent être amenés au noyau FPGA (20) et au microcontrôleur (30) pour le pilotage de l'actionneur de gouvernes de vol, et dans lequel le microcontrôleur (30) est configuré pour réaliser une surveillance indépendante ou encore une comparaison par rapport aux signaux qui sont amenés au noyau FPGA (20).

2. Aéronef selon la revendication 1, **caractérisé en ce que** le noyau FPGA (20) peut être configuré en chargeant des noyaux IP d'application.

3. Aéronef selon l'une quelconque des revendications précédentes, **caractérisé en ce que** les signaux qui sont appliqués sur les interfaces (10) sont des signaux analogiques, des signaux numériques, des transducteurs différentiels variables linéaires (LVDT), des résolveurs ou des signaux discrets.

4. Aéronef selon l'une quelconque des revendications précédentes, **caractérisé en ce que** l'appareil (100) présente au moins une sortie, qui communique avec le bus de données (110) numérique, dans lequel la sortie est en liaison avec le microcontrôleur (30) et avec le noyau FPGA (20) et dans lequel le bus de données (110) communique avec un ou plusieurs calculateurs de l'aéronef.

5. Aéronef selon l'une quelconque des revendications précédentes, **caractérisé en ce que** le noyau FPGA (20) est réalisé pour concentrer plusieurs données et/ou pour transmettre des signaux au microcontrôleur (30).

6. Aéronef selon l'une quelconque des revendications précédentes, **caractérisé en ce que** le microcontrôleur (30) est réalisé pour exécuter des algorithmes en utilisant les signaux délivrés par le noyau FPGA (20).
